# EUROPEAN PATENT APPLICATION

(11) **EP 4 763 511 A1**
(43) Date of publication of application: **24.06.2026**
(21) Application number: 24307265.9
(22) Date of filing: 22.12.2024
(51) Int. Cl.: B32B 7/12, C08G 18/08, B32B 23/00, B32B 27/36, C08G 63/688, C09J 175/06

(54) **WATER BASED COMPOSTABLE LAMINATING ADHESIVE**

(71) Applicant: ARKEMA FRANCE, 92800 Puteaux (FR)
(72) Inventor: LEE, Byoungchul, Dublin, OH 43017 (US); KARIS, Ashlynn, Dublin, OH 43017 (US); HARJU, Josh, Dublin, OH 43017 (US); PUTHANPARAMBIL, Deepa, Dublin, OH 43017 (US)
(74) Representative: Bandpay & Greuter

(57) **Abstract**

A method of adhering substrate surfaces to one another comprises applying a laminating adhesive to one of the surfaces and contacting the surfaces with one another. The laminating adhesive may be food grade compliant and compostable. The laminating adhesive comprises a blend of a sulfonated copolyester dispersion and a water soluble crosslinker, preferably the water soluble crosslinker comprises at least one of a polyfunctional isocyanate having a functionality of at least about 2.0, preferably at least about 2.2, more preferably at least about 2.5, further preferably more than about 2.7, even further preferably at least about 2.9 and most preferably at least about 3.0, a polyfunctional epoxy having a functionality of at least about 2.0, preferably at least about 2.2, more preferably at least about 2.5, further preferably more than about 2.7, even further preferably at least about 2.9 and most preferably at least about 3.0 and combinations thereof.

## Description

### FIELD OF THE INVENTION

The presently disclosed process(es), procedure(s), method(s), product(s), result(s), and/or concept(s) (collectively referred to hereinafter as the "present disclosure or invention") relates generally to a laminating adhesive composition for flexible packaging, a method of bonding a laminate with the composition, a method of preparing the composition thereof. The disclosure also relates to water soluble, preferably amorphous, sulfonated copolyester resins and adhesive compositions incorporating the sulfonated copolyester resins for application to substrate surfaces and adhering such substrate surfaces during the lamination process. In a particular embodiment the composition is a water based compostable laminating adhesive.

### BACKGROUND OF THE INVENTION

Copolyesters which have terminal hydroxyl and/or carboxyl groups are used in many adhesive applications including cold seals (Bostik's Turbo-Seal^{®} products). Copolyesters having low glass transition temperature, preferably lower than room temperature, could be used as a laminating adhesive. With suitable curing agents generally polyfunctional isocyanates they can be reacted to form higher molecular weight, crosslinked polymers which are suitable for flexible packaging as a laminating adhesive.

The circular economy is changing the way flexible packaging will develop and evolve in future. Within flexible packaging, sustainability has become a watchword. Sustainable solutions such as biodegradable, compostable, and recyclable packaging are gaining more interest in the flexible packaging industry. Especially, biodegradable/ compostable adhesives are considered as a solution to end the life cycle of the packaging without contributing to environmental pollution. Developments which aim at improving or providing one of these key factors into the final product are desirable.

The prior art describes the use of polyurethane dispersion with polyfunctional isocyanate crosslinker. However, the urethane functional group is not susceptible to hydrolysis under industrial composting condition described by ASTM D6400. Therefore the degree of compostability will depend on the concentration of the urethane functional group in the final composition and this urethane functional group concentration needs to be minimized to achieve desired biodegradability/compostability of the adhesives.

U.S. Patent No. 8,956,497 discloses a method of adhesive bonding one biodegradable substrate to the second biodegradable substrate using a biodegradable aqueous dispersion of polyurethane.

U.S. Patent No. 9,359,526 discloses the use of an aqueous polyurethane adhesive to produce biodisintegratable composite foils where two biodegradable substrates are adhesively bonded with the use of a biodegradable polyurethane dispersion adhesive.

### BRIEF DESCRIPTION

These and other objects of the present disclosure will become apparent in light of the following disclosure.

An embodiment of the present disclosure relates to a laminating adhesive composition, preferably compostable, preferably for flexible packaging, comprising: (i) a sulfonated, preferably an amorphous, copolyester resin and (ii) a water soluble crosslinker. These copolyesters bond adequately to a variety of substrates, including polar substrates as well as various types of compostable substrates.

According to an embodiment of the disclosure, a particular embodiment of the composition of the laminating adhesive comprises a sulfonated amorphous copolyester resin, preferably comprising (i) residue of 2 or more, preferably aliphatic, diols, (ii) residue of one or more, for example 2 or more, sulfonated diacids, (iii) residue of one or more, for example 2 or more, aromatic diacids or diesters and (iv) residue of one or more, for example 2 or more, aliphatic diacids. In a further particular embodiment, the amorphous copolyester includes one or more pendant sulfonate groups. The laminating adhesive composition may further include a water soluble crosslinker.

In order to meet at least some of the needs described herein and not met by various prior art references, the present disclosure provides a method of adhering a first substrate surface to a second substrate surface comprising: applying an aqueous dispersion of a sulfonated copolyester resin, preferably amorphous, preferably of a sulfonated copolyester resin and water soluble crosslinker mixture, to the first substrate surface; and contacting the first substrate surface with the second substrate surface to form a laminate, preferably wherein the method is carried out at conventional laminating conditions. In the laminate thus formed, the aqueous dispersion is disposed between the first and second substrate surfaces.

According to an embodiment included herein, a composition comprises a sulfonated amorphous copolyester resin, preferably comprising the reaction product of: (a) at least two diols comprising ethylene glycol at a mole fraction of at least about 0.25, preferably at least about 0.5, and most preferably at least about 0.7 and preferably at most about 0.97, preferably at most about 0.95, and most preferably at most about 0.92 mole fraction based on the total amount of diols; and (b) at least three diacids or diesters comprising: (i) at least one sulfomonomer at a mole fraction based on the diacids or diesters of at least 0.02, preferably at least about 0.03, more preferably at least about 0.05, more preferably at least about 0.07, preferably at least about 0.08, and most preferably at least about 0.09 and preferably at most about 0.2, more preferably at most about 0.15, and most preferably at most about 0.12; (ii) at least one aromatic diacid or diester; and (iii) at least one aliphatic diacid or diester, wherein, preferably, the ratio of aromatic to aliphatic diacids or diesters is between about 75/25 and about 45/55, preferably between about 72/28 and about 48/52, more preferably between about 70/30 and about 50/50, and most preferably between about 68/32 and about 50/50, and a water soluble crosslinker. The sulfonated amorphous copolyester resin preferably has a glass transition temperature between about -25°C and about 15°C, preferably between about -18°C and about 10°C, and most preferably between about -10°C and about 5°C or most preferably between about -20°C and about -5°C.

According to another embodiment, a composition comprises a sulfonated amorphous copolyester resin described above, an organic solvent and a water soluble crosslinker. An application of the composition is as a laminating adhesive, preferably as an aqueous dispersion.

Advantages of the embodiments disclosed herein may include compositions which exhibit sufficient bond strength to function as an laminating adhesive, e.g., laminating adhesives exhibiting a bond strength of at least about 50 gli (grams/linear inch), preferably at least about 100 gli, more preferably at least about 150 gli, even more preferably at least about 200 gli, exhibit sufficient extended storage stability of at least about 30 days, preferably at least about 60 days, more preferably at least about 90 days, and/or the compositions are compostable. Methods for determining the bond strength and extended storage stability are described herein.

The disclosure also relates to a laminate formed by a method as described herein.

The disclosure also relates to an article comprising at least one substrate having a first surface and a second surface mated with one another and either one or both of the first and second surfaces having a composition, such as an aqueous dispersion, as described herein disposed thereon.

### DETAILED DESCRIPTION OF THE INVENTION

The present disclosure may be understood more readily by reference to the following detailed description of certain embodiments of the disclosure and the working examples.

The term "copolyester" is understood to mean a synthetic polymer prepared by the reaction of one or more difunctional carboxylic acids or esters (i.e., diacids or diesters) with one or more difunctional hydroxyl compounds (i.e., diols). In the present disclosure, the terms "(sulfonated) copolyester" and "(sulfonated) copolyester resin" have the same meaning and can be used interchangeably.

By "crosslinker" is meant a compound which is able to create covalent or ionic bonds between polymer chains, which generally results in the formation of a three-dimensional network structure. Crosslinkers have preferably a functionality greater than or equal to 2.

An example of an embodiment of the term substrate is a film.

In the present disclosure, by "room temperature" it is preferably meant a temperature of 20-25°C, more preferably about 25°C.

An embodiment of the disclosure provides a composition comprising an amorphous copolyester resin. As used herein, "amorphous" means a material that is essentially amorphous, such as having a heat of fusion of less than 5 Joules/gram, preferably less than 1 Joules/gram, and most preferably essentially zero Joules/gram. Heat of fusion values provided herein are determined according to ASTM E793-01 "Standard Test Method for Enthalpies of Fusion and Crystallization by Differential Scanning Calorimetry."

According to an embodiment of the disclosure directed to a method of adhering a first substrate surface to a second substrate surface, the method comprises applying a composition, preferably a laminating adhesive (also referred to laminating adhesive composition herein), comprising an aqueous dispersion of a sulfonated copolyester resin and a water soluble crosslinker, to the first substrate surface; and contacting the first substrate surface with the second substrate surface to form a laminate, wherein the method is optionally carried out at ambient temperature or conventional laminating temperature. Preferably the ambient temperature comprises (or is) at least about 5°C, more preferably at least about 10°C, even more preferably at least about 20°C, further preferably no more than about 60°C, and most preferably no more than about 50°C, for example from 5 to 60°C, preferably from 10 to 50°C, more preferably from 20 to 50°C, even more preferably from 20 to 30°C or from 20 to 25°C. Preferably, the conventional laminating temperature comprises (or is) no more than about 60°C, preferably no more than about 50°C, more preferably no more than 45°C, even more preferably no more than about 40°C.

In this embodiment, the first and second surfaces could be of two different substrates or of a single substrate. The material of the substrates may vary over a wide range and include standard substrates, such as PET, metallized PET and linear low-density polyethylene (LLDPE), and compostable or biodegradable substrates, such as polylactic acid, polybutylene succinate (PBS), cellulose-based substrates, e.g., cellophane (or cellulose), and polyhydroxy alkanoates (PHA). Compostable substrates may also include metallized cellophane and/or metallized polylactic acid ("PLA"). For example, the substrate of the first substrate may be in cellulose, and the substrate of the second surface may be in PBS or in metallized PLA (metallized polylactic acid).

In some embodiments, the substrate having the first surface and/or the second surface does not comprise metallized PLA, preferably the substrate(s) of the first substrate surface and of the second substrate surface do not comprise metallized PLA. In particular, the substrates may comprise (or be in) cellulose (or cellophane), metallized cellulose, PBS, PHA, PET, metallized PET, LLDPE or combinations thereof, preferably cellulose, metallized cellulose, PBS, PHA or combinations thereof.

The substrate could be roll stock used for making a bag, pouch, or sachet. A master roll of packaging could be produced at a first site, then slit into child rolls for use at copackers or brand owners. This is the final package that the consumer sees with the packaged food in it, ready to eat.

The step of applying the composition to the first substrate surface may be any suitable method. For example, the composition may be applied to the first substrate surface and the second substrate surface in any known way, for example by immersion or dip coating, roll-coating, reverse roll coating, spraying, knife over-roll coating, air-knife coating, gravure application, gravure pattern application, or slot die processes. The contacting step is preferably done at a time and at a pressure sufficient to bond the first substrate surface to the second substrate surface. In one embodiment, preferably, the resulting bond has a bond strength sufficient to achieve an average of above 150 grams per linear inch (gli), as measured by the bond strength test as conducted on an Instron 3343 tensile tester following ASTM D903, at ambient conditions (25°C and 50% RH), with a peel speed of 12 inches/minute. As used herein, ambient temperature is about 25°C. As described in more detail below, the copolyester resin may either be a single copolyester resin product or a blend of two or more copolyester resin products. In addition, the composition could be a solution or a dispersion. In particular the composition, more particularly the laminating adhesive, comprises, or is, an aqueous sulfonated copolyester dispersion.

According to an embodiment of the disclosure, the copolyester resin is sulfonated. This means that the copolyester resin is the reaction product of monomers containing at least one sulfomonomer. The sulfomonomer is difunctional and is preferably a dicarboxylic acid (also called diacid herein) or ester thereof (such as a diester) containing a metal sulfonate group and/or a glycol containing a metal sulfonate group and/or a hydroxy acid containing a metal sulfonate group. The cation of the sulfonate salt can be NH₄⁺, or a metal ion, such as Li⁺, Na⁺, K⁺, Mg⁺⁺, Ca⁺⁺, Cu⁺⁺, Ni⁺⁺, Fe⁺⁺, Fe⁺⁺⁺. Preferred are monovalent cations, such as NH₄⁺, Li⁺, Na⁺, and K⁺, when stability in water is desired. Preferably, the sulfomonomer contains a -SO₃M group attached to an aromatic nucleus, wherein M is hydrogen, NH₄⁺, or a metal ion. The difunctional sulfomonomer may in particular be either a dicarboxylic acid or a diol adduct containing a -S0₃M group. In preferred embodiments, the sulfomonomer is dimethyl 5-sulfoisophthalate sodium salt or 5-sulfoisophthalic acid.

Preferably the composition, in particular the laminating adhesive, comprises a water based adhesive.

According to an embodiment disclosed herein, the composition is a mixture (also called herein blend) of the sulfonated copolyester resin and a water soluble crosslinker and an optional organic solvent. The blend of the resin and a solvent may be referred to herein as a coating composition. In some embodiment, the composition comprises a reaction product of the sulfonated copolyester resin and a water soluble crosslinker and an optional organic solvent. As used herein, a solvent may contemplate a single solvent or a mixture of solvents. The solvent used will depend on the solubility characteristics of the composition prior to solvation and the end use. A wide range of solvents may be used, depending on these factors. The solvent, or solvent mixture, is preferably chosen to provide a composition with a suitable viscosity and solubilizes the copolyester resin with minimal heat and agitation. Preferably, the solvent is an organic solvent. Preferably, the solvent is selected from the group consisting of tert-butanol, acetone, isopropyl alcohol, tetrahydrofuran, and 1,3-dioxolane or mixtures thereof. In a preferred embodiment, the organic solvent comprises a water-soluble organic solvent, such as tert-butanol, acetone, isopropyl alcohol, or a mixture thereof. It has been found that acetone lowers the viscosity of the composition sufficiently. In a preferred embodiment, the organic solvent is present in an amount corresponding to a value of about 10 to 40% solids by weight, preferably about 20 to 40% solids by weight, and/or the weight ratio of water: organic solvent (preferably tert-butanol and isopropyl alcohol) is from about 90:10 to about 50:50, preferably at least about 60:40, such as from about 90:10 to about 60:40, or preferably from about 80:20 to about 60:40. In another embodiment, the solvent consists of water.

The compositions may include a water soluble crosslinker. An example of a suitable water soluble crosslinker may include a water-soluble (1) a polyfunctional isocyanate or (2) a polyfunctional epoxy. Thus, an example of water soluble crosslinker may be a polyfunctional isocyanate having a functionality of at least about 2.0, preferably at least about 2.2, more preferably at least about 2.5, further preferably more than about 2.7, even further preferably at least about 2.9 and most preferably at least about 3.0. Examples of suitable polyfunctional isocyanates include Bayhydur 302, Bayhydur 304, Bayhydur 305, Bayhydur XP 2547, Bayhydur XP 2655 from Covestro, and Purethane^{®} C-CAT 108 from Bostik Inc..

Another example of the water soluble crosslinker may be a polyfunctional epoxy having a functionality of more than 2.0, preferably at least about 2.2, more preferably at least about 2.5, further preferably more than about 2.7, even further at least about 2.9 and most preferably at least about 3.0.

Some examples of polyfunctional epoxies may include Westlake EPON Resin 154 available from Westlake Epoxy, Denacol GEX series of epoxy compounds including EX300, EX500 and EX600 series of resins available from Denacol. A further example is SUMI-epoxy ELM-434 series available from Sumitomo.

Suitable polyfunctional isocyanates and polyfunctional epoxies are not limited to the above specific embodiments, such embodiments are exemplary and not meant to be limiting.

Further examples may include combinations of the above water soluble polyfunctional isocyanates and polyfunctional epoxies.

Examples of suitable amounts of crosslinker in the composition include up to about 10 wt%, up to about 7 wt%, up to about 5 wt%, up to about 3 wt%, less than about 3 wt%, at least about 0.5 wt%, at least about 1 wt% and at least about 2 wt% (such as for example from about 0.5 wt% to about 10 wt%, or from about 1 wt% to about 7 wt%, or from about 1 wt% to about 5 wt%, or from about 1 wt% to about 3 wt%, or from about 2 wt% to about 3 wt%, or from about 0.5 wt% to less than about 3 wt%, or from about 1 wt% to less than about 3 wt%, or from about 2 wt% to less than about 3 wt%).

The water soluble crosslinker, e.g., polyfunctional isocyanate and/or polyfunctional epoxy, is typically added to the composition, preferably a sulfonated copolyester water dispersion, right before coating and mixed using mechanical stirrer. This polyfunctional isocyanate (or polyfunctional epoxy) crosslinker reacts with hydroxyl and/or carboxyl functional groups in copolyester at ambient temperature and form higher molecular weight crosslinked polymer network which brings improved thermal and mechanical stability. Laminates which included the sulfonated copolyester which was crosslinked exhibited strong adhesion between the substrates forming the laminate as compared to laminates formed with conventional adhesives.

Preferably the sulfonated copolyester resin has a glass transition temperature (Tg) of less than room temperature, in particular embodiments of no more than about 10°C, below about 5°C, or no more than, or below, about 0°C. In another embodiment, the sulfonated copolyester resin may have a glass transition temperature of no more than about - 10°C. According to an embodiment of the disclosure, the sulfonated copolyester resin has a glass transition temperature between about from about -45 °C to about 15°C, preferably between about -40°C and about 10°C. In a particular embodiment, the glass transition temperature may range from between about -40°C to about 15°C. In other embodiments, the sulfonated copolyester resin, preferably an amorphous sulfonated copolyester resin, has a glass transition temperature between about -25°C and about 15°C, preferably between about - 18°C and about 10°C, and most preferably between about -10°C and about 5°C or between about -20°C and about -5°C. The glass transition temperature as described herein is measured using Differential Scanning Calorimetry (DSC) according to ASTM E-794-01 except with one modification to the test in that a scanning temperature of 15°C per minute instead of 10°C per minute was used. When the sulfonated copolyester resin is a single sulfonated copolyester resin product (i.e., the sulfonated copolyester resin formed from a single esterification or transesterification reaction scheme), then the glass transition temperature is the glass transition temperature of that single sulfonated copolyester resin product. When the sulfonated copolyester resin is a blend of two or more single sulfonated copolyester resin products, then the glass transition temperature may be a weighted average of the glass transition temperature of sulfonated copolyester resin products used to form the blend. For example, a blend of 75% by weight of a first sulfonated copolyester resin product having a glass transition temperature of -20°C and 25% by weight of a second sulfonated copolyester resin product having a glass transition temperature of 20°C, the glass transition temperature of the blend would be -10°C. This methodology is true for determining all properties of the sulfonated copolyester resin used herein. Thus, one of the sulfonated copolyester resin products used in a blended product might have a value outside of the desired range but, when combined with another sulfonated copolyester resin product, the blend could be according to the above embodiments so long as the value falls within the desired range.

Preferably, the sulfonated copolyester resin has a melting temperature (Tm) of below about 50°C, more preferably below about 40°C, even more preferably no more than about 20°C, further preferably no more than about 10°C. In preferred embodiment, the sulfonated copolyester resin does not have a Tm.

The term "reaction product" as used herein when referring to the copolyester resin may refer to any product of an esterification or transesterification reaction of any of the monomers used in making the (sulfonated) copolyester (i.e., the monomers charged to the reaction) or monomers formed *in situ* during the reaction including by an interaction of the monomers used, including an oligomer or the final copolyester, reacted to a certain acid number and or viscosity.

In an embodiment, the sulfonated copolyester resin comprises (or is) the reaction product of: (a) at least one diol comprising ethylene glycol, preferably at least two diols comprising ethylene glycol, wherein ethylene glycol is preferably at a mole fraction of at least about 0.25, preferably at least about 0.5, and most preferably at least about 0.7 based on the diols and, preferably, at most about 0.97, preferably at most about 0.95, and most preferably at most about 0.92 mole fraction based on the total amount of diols (such as from about 0.25 to about 0.97, or from about 0.5 to about 0.95, or from about 0.7 to about 0.92); and (b) at least three diacids or diesters comprising: (i) at least one sulfomonomer, preferably at a mole fraction based on the diacids or diesters of at least 0.02, preferably at least about 0.03, more preferably at least about 0.05, more preferably at least about 0.07, more preferably at least about 0.08, and most preferably at least about 0.09 and at most about 0.2, more preferably at most about 0.15, and most preferably at most about 0.12 (such as from 0.02 to about 0.2, or from about 0.03 to about 0. 2, or from about 0.05 to about 0.15, or from about 0.07 to about 0.15, or from about 0.08 to about 0.12, or from about 0.09 to about 0.12); (ii) at least one aromatic diacid or diester; and (iii) at least one aliphatic diacid or diester. In other embodiments, the at least one sulfomonomer is present at a mole fraction based on the diacids or diesters of at least 0.07, preferably at least about 0.08, more preferably at least about 0.09. In other embodiments the sulfonated copolyester resin comprises the reaction product of: (a) at least two diols comprising ethylene glycol at a mole fraction of at least about 0.5, preferably at least about 0.6, more preferably at least about 0.7, and most preferably at least about 0.75 based on the diols to at most about 0.95, more preferably at most about 0.9 (such as from 0.5 to 0.95, or 0.6 to 0.95, or 0.7 to 0.9, or 0.75 to 0.9) and (b) at least three diacids or diesters comprising: (i) at least one sulfomonomer at a mole fraction based on the diacids or diesters of at least 0.02, preferably at least about 0.03, more preferably at least about 0.05, more preferably at least about 0.07, more preferably at least about 0.08, and most preferably at least about 0.09 and at most about 0.2, more preferably at most about 0.15, and most preferably at most about 0.12 (such as from 0.02 to about 0.2, or from about 0.03 to about 0.2, or from about 0.05 to about 0.15, or from about 0.07 to about 0.15, or from about 0.08 to about 0.12, or from about 0.09 to about 0.12); (ii) at least one aromatic diacid or diester; and (iii) at least one aliphatic diacid or diester. In a preferred embodiment, the molar ratio of aromatic to aliphatic diacids or diesters is between about 75/25 and about 45/55, preferably between about 72/28 and about 48/52, more preferably between about 70/30 and about 50/50, and most preferably between about 68/32 and about 50/50. In the present disclosure, the above-mentioned molar ratio of aromatic to aliphatic diacids or diesters is determined based on the total diacids or diesters used, including the at least one sulfomonomer, the at least one aromatic diacid or diester and at least one aliphatic diacid or diester.

In a preferred embodiment, the monomers used may include the following:
a. at least one sulfomonomer comprising at least one of, or selected from at least one of, dimethyl-5-sulfoisophthalate sodium salt (DMSIP) or 5-sulfoisophalic acid (SIPA), preferably DMSIP; and/or (preferably and)
b. at least one aliphatic diacid or diester comprising at least one of, or selected from the group consisting of at least one of, succinic acid, sebacic acid, azelaic acid, and adipic acid, preferably sebacic acid; and/or (preferably and)
c. at least one aromatic diacid or diester comprising at least one of, or selected from the group consisting of at least one of, isophthalic acid, dimethyl terephthalate, terephthalic acid, and dimethyl isophthalate, preferably isophthalic acid and dimethyl terephthalate; and/or (preferably and)
d. at least two diols, one of which is ethylene glycol, and further comprising a second diol comprising at least one of, or selected from the group consisting of at least one of, diethylene glycol, neopentyl glycol, diethylene glycol, trimethylol propoane, and cyclohexane dimethanol, preferably neopentyl glycol.

The combination of monomers balances a wide range of properties beneficial for some of the applications described herein. For use as a cold seal, the resin produced by these monomers provides the cohesive strength as described above. Moreover, the copolyester resin solvates easily at up to 40% solids in water and an organic solvent, preferably polar organic solvents, such as but not limited to isopropyl alcohol, tert-butanol, acetone or combination thereof. In addition, the glass transition temperature is within the range desired for use as a laminating adhesive.

In particular embodiments a dispersion may include water, organic solvent, e.g., the aforementioned polar solvents, and the, preferably amorphous, copolyester having one or more pendant sulfonate groups (i.e. the sulfonated copolyester). The dispersion may include up to about 50 wt% of the organic solvent, in a particular embodiment up to about 45 wt%, further particular embodiment up to about 40 wt%, another embodiment may include at least 20 wt% of the organic solvent.

In an alternate the dispersion may include less than about 5 wt% of the organic solvent. This embodiment includes being organic solvent free and all percentages between 0 to 5%.

In some embodiments, a weight ratio of water: organic solvent in the dispersion may comprise from about 90:10 to about 50:50, preferably at least about 80: 20 to about 60:40, more preferably about 75:25 to about 65:35.

In some embodiments, the organic solvent may be present in an amount corresponding to the dispersion having a solids value of about 10% to about 40% by weight, preferably about 12% to about 35%, more preferably at least about 20% up to about 35%.

Optional components for the composition, such as the dispersion may include an organic solvent.

In a preferred embodiment, the monomers used as charges to the reaction may include, or be, the following, in the following amounts:
a. dimethyl-5-sulfoisophthalate sodium salt in an amount from about at least 0.02, preferably at least about 0.03, more preferably at least about 0.05, more preferably about 0.07 to about 0.2, preferably from about 0.08 to about 0.15, and most preferably from about 0.09 to about 0.12 mole fraction based on the total amount of diacids and diesters;
b. isophthalic acid is present in an amount from about 0.02 to about 0.2, preferably from about 0.03 to about 0.15, and most preferably from about 0.05 to about 0.1 mole fraction based on the total amount of diacids and diesters;
c. dimethyl terephthalate is present in an amount from about 0.25 to about 0.55, preferably from about 0.3 to about 0.5, and most preferably from about 0.35 to about 0.45 mole fraction based on the total amount of diacids and diesters;
d. sebacic acid is present in an amount from about 0.18 to about 0.4, preferably from about 0.2 to about 0.38, and most preferably from about 0.25 to about 0.35 mole fraction based on the total amount of diacids and diesters;
e. ethylene glycol is present in an amount from about 0.65 to about 0.97, preferably from about 0.75 to about 0.95 (such as from about 0.75 to 0.92), and most preferably from about 0.80 to about 0.92 mole fraction based on the total amount of diols;
f. neopentyl glycol is present in an amount from about 0.03 to about 0.25, preferably from about 0.05 to about 0.2, and most preferably from about 0.08 to about 0.15 mole fraction based on the total amount of diols; and
g. optionally, diethylene glycol is present in an amount from about 0.01 to about 0.25 (for example from about 0.05 to about 0.25 mole), preferably from about 0.01 to about 0.20, more preferably from about 0.01 to about 0.15, and most preferably from about 0.05 to about 0.12 mole fraction based on the total amount of diols.

The mole fractions for each monomer are calculated by dividing the number of moles of the monomer added to the reaction by the total number of moles of monomers of that class (either diols on the one hand or diacids and diesters, on the other). In a preferred embodiment in which the above six or seven monomers are the only monomers used, the mole fractions of ethylene glycol, diethylene glycol (if added), and neopentyl glycol sum to one, and the mole fractions of dimethyl-5-sulfoisophthalate sodium salt, isophthalic acid, dimethyl terephthalate, and sebacic acid sum to one. The monomers used may comprise, consist essentially of, or consist of the six or seven monomers listed above. Unless otherwise noted herein, the mole fractions and ratios of monomers provided herein are of the relative amounts of monomers charged to the reaction. In some cases, when ethylene glycol is used, some amount of diethylene glycol is formed. Such diethylene glycol will also react *in situ* with a diacid or diester so that a residue of diethylene glycol forms part of the backbone of the copolyester. For example, in embodiments in which between about 0.8 and about 0.92 mole fraction of ethylene glycol is used, diethylene glycol may be formed *in situ* and become part of the copolyester backbone in an amount of about 0.07 to about 0.32, preferably between about 0.12 to about 0.25, with a corresponding decrease in the amount of ethylene glycol. The amount of diethylene glycol formed depends on the presence and amount of highly acidic acids and the conditions of the reaction (i.e., generally with increasing time and temperature of reaction, more diethylene glycol is formed). By purposely adding diethylene glycol to the charge, the amount of diethylene glycol residue being formed throughout the reaction may be more precisely controlled. For example, in embodiments in which between about 0.75 and about 0.92 mole fraction of ethylene glycol combined with about 0.05 to about 0.25 mole fraction of diethylene glycol is used, diethylene glycol may be formed *in situ* and become part of the copolyester backbone as diethylene glycol residue in an amount of preferably between about 0.12 to about 0.25 bound mole fraction, with a corresponding decrease in the amount of ethylene glycol, for example leading to about 0.70 and about 0.87 bound mole fraction of ethylene glycol residue.

In an embodiment, the diols used are mostly, substantially all, or all aliphatic. In the disclosure, by "mostly" it is preferably meant at least 50 mole % and by "substantially all" it is preferably meant at least about 90 mole %. In a preferred embodiment, the diols comprise, consist essentially of, or consist of ethylene glycol and neopentyl glycol. Preferably, the molar ratio of ethylene glycol: neopentyl glycol is from about 3: 1 to about 20:1, preferably between about 4:1 to about 15:1, more preferably between about 5:1 to about 12: 1, and most preferably between about 7:1 and about 17:2. These ratios help the sulfonated copolyester resin to achieve the suitable glass transition temperature desirable for the application described herein.

In another embodiment in which diethylene glycol also is used as a monomer charged to the reaction, the diols comprise, consist essentially of, or consist of ethylene glycol, diethylene glycol, and neopentyl glycol. Preferably, the molar ratio of ethylene glycol: diethylene glycol: neopentyl glycol is from about 3:1:1 to about 20:1:1, preferably between about 4:1:1 to about 15:1:1, more preferably between about 5:1:1 to about 12:1:1, and most preferably between about 7:1:1 and about 17:2:2. These ratios help the sulfonated copolyester resin to achieve the suitable glass transition temperature desirable for the application described herein.

In an embodiment, the diacid and diester components include both aliphatic and aromatic monomers. As is known in making copolyester, either an acid or an ester may be used in combination with an alcohol to form the copolyester resin by an esterification reaction or a transesterification, respectively. Preferably, a molar ratio of aromatic to aliphatic diacids or diesters is between about 75/25 and about 45/55, preferably between about 72/28 and about 48/52, more preferably between about 70/30 and about 50/50, and most preferably between about 68/32 and about 50/50. This ratio provides a copolyester resin which is sufficiently tacky yet does not provide so much adhesive and cohesive strength to cause substrate failure or excessive blocking.

In some embodiments, the sulfonated copolyester resin may comprise a blend of at least one sulfonated copolyester which comprises, or is, the reaction product of: (a) at least two diols and (b) at least three diacids or diesters comprising: (i) at least one sulfomonomer; (ii) at least one aromatic diacid or diester; and (iii) at least one aliphatic diacid or diester as described above and at least one second sulfonated copolyester which comprises, or is, the reaction product of: (a) ethylene glycol and (b) at least three diacids or diesters comprising: (i) at least one sulfomonomer; (ii) at least one aromatic diacid or diester; and (iii) at least one aliphatic diacid or diester (the at least three diacids or diesters of the second sulfonated copolyester may be as described above).

According to an embodiment, a composition may comprise a sulfonated amorphous copolyester resin, preferably comprising the reaction product of: (a) at least two diols comprising ethylene glycol at a mole fraction of at least about 0.25, preferably at least about 0.5, and most preferably at least about 0.7 based on the diols and (b) at least three diacids or diesters comprising: (i) at least one sulfomonomer at a mole fraction based on the diacids or diesters of at least 0.02, preferably at least about 0.03, more preferably at least about 0.05, more preferably at least about 0.07, preferably at least about 0.08, and most preferably at least about 0.09 and at most about 0.2, more preferably at most about 0.15, and most preferably at most about 0.12; (ii) at least one aromatic diacid or diester; and (iii) at least one aliphatic diacid or diester, wherein the ratio of aromatic to aliphatic diacids or diesters is between about 75/25 and about 45/55, preferably between about 72/28 and about 48/52, more preferably between about 70/30 and about 50/50, and most preferably between about 68/32 and about 50/50 and the sulfonated amorphous copolyester resin has a glass transition temperature between about -50°C and about 15°C, preferably between about -40°C and about 10°C. Preferably, the composition further comprises an organic solvent, resulting in a mixture of the sulfonated amorphous copolyester resin and the organic solvent. The form of the mixture may be a solution or a dispersion. The organic solvent is preferably *tert*-butanol, acetone, isopropyl alcohol, tetrahydrofuran, and 1,3-dioxolane or mixtures thereof. In a preferred embodiment, the solvent is a solvent mixture of water and an organic solvent, and, more preferably, the organic solvent is either *tert*-butanol or isopropyl alcohol or a mixture thereof. Still more preferably, this solvent mixture of water and *tert*-butanol /isopropyl alcohol is present in an amount corresponding to a value of about 10 to 40% by weight, preferably of about 20 to 40% solids by weight, and the weight ratio of water: organic solvent is from about 90:10 to about 50:50, preferably from about 80:20 to about 60:40. The composition may also include a water soluble crosslinker. The embodiment contemplates compositions which are compostable or not, methods using such compositions, and articles formed from such compositions.

As mentioned above, the mole fractions and ratios of monomers provided herein are of the relative amounts of monomers charged to the reaction unless otherwise noted. A mole fraction or ratio described herein as a bound mole fraction or bound ratio refers to that mole fraction or ratio of that residue that is part of the copolyester backbone. Thus, even though a particular embodiment might have no diethylene glycol used as a monomer charged to the reaction, if diethylene glycol is formed *in situ* and becomes part of the copolyester resin formed, then the copolyester resin may have a bound mole fraction of diethylene glycol residues above zero, such as between about 0.07 to about 0.32, and most preferably at least about 0.12 to about 0.25 based on the diols.

It is believed that embodiments disclosed herein are compostable. The composting process uses microorganisms such as bacteria or fungi to break down the organic materials, the latter producing carbon dioxide, water, heat, and compost. It is important that microorganisms have a continuous supply of organics, water, and oxygen.

The standard methods for compostable testing are EN 13432 for packaging and ASTM D6400 and ASTM D5338, which are standard specifications for compostable plastics. To be considered compostable, the product must demonstrate the three following items:
a. Disintegration: After starting with the product cut to 2 cm lengths, in 12 weeks of composting under laboratory controlled composting compositions 90% of the product must pass a 2 mm sieve.
b. Biodegradation: 60% of the organic carbon must be converted to carbon dioxide by the end of the test period when compared to the positive control (cellulose).
c. No adverse effect on the quality of the compost: The germination rate and the plant biomass of the sample composts shall be no less than 90% and levels of heavy metals shall be less than certain standards, which depend on the regions.

Special conditions are required to perform this test. First, a temperature-controlled incubator is used to maintain a temperature of 58°C, the composting vessel (7.5 liters capacity) is split into two parts by use of a porous pad. The bottom part contains 1 liter of water and carbon dioxide is bubbled through this water to saturate the gas with water.

Inoculum: A 3-month-old compost is used; it is sieved through a 9.5 mm sieve and mixed. Ammonium chloride is added such that the C/N ratio is less than 15 and water volume is adjusted so that the moisture content is 50%.

Disintegration test: The test starts with 200g of 2 cm x 2 cm squares of the product, which are added to 1.2 kg of compost and put into the 7.5 liters vessel. The mixture is composted for 12 weeks; the vessel is shaken weekly to mix samples and compost and to prevent channeling. After 12 weeks, material is screened through a 2 mm sieve. No more than 10% of the original dry weight of the product can be retained on the sieve.

Biodegradation: This test is made with four mixes: Sample (10 g of the product and 600 g of compost), positive control (replacing the product by cellulose), a negative control (100g of PET and 600g of compost), and a blank (600g of compost only).

The moisture content of the mixtures is adjusted to 50%. The composting vessels are placed in the incubator at 58°C ± 2°C. The CO₂ free air is then connected and adjusted so that the flow rate is between 150 and 200 ml per minute. The gases exiting the test chambers are plumbed to a solenoid valve, which is controlled to divert air for 2 minutes out of every 2 hours. These diverted gases flow into 1-liter adsorption units containing a known volume of 1N sodium hydroxide to adsorb the carbon dioxide being produced in the vessels (for the remainder to the 2 hours the exhaust is simply vented to the room). The sodium hydroxide is periodically titrated to measure the CO₂ production; the standard days for the titration are 3, 7, 14, and every 7 days after that. Titration is made to pH 8.5 with 0.5N HCl after adding BaCl₂ to precipitate the carbonates formed by the CO₂. Fresh 1N sodium hydroxide is placed in the absorption units and the whole process is repeated. The testing is carried out until the CO₂ production from both the sample and the positive control have plateaued up to a maximum of 180 days.

Certain preferred embodiments of the sulfonated copolyester resin relate to the properties of the sulfonated copolyester resin as formed. In one such embodiment, the sulfonated, preferably amorphous, copolyester resin has an acid number of less than about 10 mg KOH/g, preferably less than about 7 mg KOH/g but greater than 0.1 mg KOH/g, preferably greater than about 1 mg KOH/g (such as from about 0.1 to about 10 mg KOH/g, preferably from about 1 to about 7 mg KOH/g). The acid number as used herein is determined in accordance with DIN EN ISO 2114. The specimen to be investigated is dissolved in dichloromethane and methanol (80:20 volumetric blend) and titrated with 0.1 N sodium hydroxide solution in the presence of phenolphthalein. The acid number is the amount of milligrams of potassium hydroxide required to neutralize the acid present in one gram polymer. The acid number is a measure of the extent of reaction in forming the copolyester resin and decreases as the reaction progresses.

Number average molecular weight and weight average molecular weight are determined using a size exclusion chromatography (SEC) using PMMA reference standards and DMSO as the solvent. The sulfonated, preferably amorphous, copolyester resin preferably has a number average molecular weight (Mn) of between about 1000 to about 15,000 Daltons, preferably between about 5000 and about 12,000 Daltons, and preferably has a weight average molecular weight (Mw) of between about 7,000 to about 45,000 Daltons, preferably between about 15,000 to about 40,000 Daltons. In yet another embodiment, the sulfonated, preferably amorphous, copolyester resin has a Brookfield Thermosel melt viscosity at 215°C of between about 5,000 and about 150,000 cP with a #27 spindle at rotational speed between about 0.5 and 10 rpm. In yet another embodiment, the inherent viscosity of the sulfonated copolyester resin is from about 0.1 dl/g to about 0.7 dl/g, preferably from about 0.15 dl/g to about 0.55 dl/g. As used herein, inherent viscosity is determined in accordance with ASTM D5225-14. Both the molecular weight and the viscosity of the copolyester resin increase as the reaction progresses.

The sulfonated copolyester used herein may be produced by any conventional method for producing a copolyester by a transesterification method or a direct esterification method. However, in consideration of food applications, use of heavy metals or compounds that pose a problem in hygiene as catalysts and additives should be avoided or limited. The sulfonated copolyesters used herein can be prepared from diacids or diesters and diols which react in substantially equal proportions and are incorporated into the copolyester polymer as their corresponding residues. As is well-known, the diols are added in excess, because unreacted diols are more easily evaporated than unreacted diacids or diesters. The copolyesters can contain substantially equal molar proportions of diacid or diester residues and diol residues. The mole percentages provided in the present disclosure, therefore, may be based on the total moles of diacid and diester charges or the total moles of diol charges, except where noted as bound mole fractions or ratios.

Suitable methods include, but are not limited to, the steps of reacting one or more dicarboxylic acids with two or more diols at a temperature of 100°C to 315°C at a pressure of 0.1 to 760 mm Hg for a time sufficient to form a polyester. U.S. Pat. No. 3,772,405, incorporated herein by reference, describes suitable methods of producing copolyesters. In one process for making the copolyester resin, the process comprises: (I) heating a mixture comprising the selected monomers useful in any of the copolyesters in the presence of a catalyst at a temperature of 150 to 240° C for a time sufficient to produce an initial polyester; (II) heating the initial polyester of step (I) at a temperature of 240 to 320° C for 1 to 4 hours; and (III) removing any unreacted glycols.

Suitable catalysts for use in this process include, but are not limited to, organozinc, titanium, or tin compounds, although organo-tin compounds are not preferred for food and beverage applications. The use of this type of catalyst is well-known in the art. Examples of catalysts useful herein include, but are not limited to, zinc acetate dihydrate, butyltin tris-2-ethylhexanoate, dibutyltin diacetate, titanium (IV) 2-ethylhexyloxide, titanium (IV) butoxide and/or dibutyltin oxide. Other catalysts may include, but are not limited to, those based on manganese, lithium, germanium, and cobalt. Catalyst amounts can range from 10 ppm to 20,000 ppm, or 10 to 10,000 ppm, or 10 to 5000 ppm, or 10 to 1000 ppm, or 10 to 500 ppm, or 10 to 300 ppm, or 10 to 250 ppm, based on the catalyst metal and the weight of the final polymer. The process can be carried out in either a batch or continuous process.

According to a preferred embodiment, the sulfonated copolyester resin is the reaction product of the following seven monomers present in the following molar ratios: about 0.81 ethylene glycol, about 0.09 diethylene glycol and about 0.10 neopentyl glycol based on the total amount of glycols; and about 0.41 sebacic acid, about 0.39 dimethyl terephthalate, about 0.1 DMSIP, and about 0.1 isophthalic acid based on the total amount of diacids and diesters. In an embodiment, the copolyester resin is a resin made from a single esterification/transesterification scheme having these monomers in these relative amounts. In another embodiment, the copolyester resin is a blend of two or more resins, each made from its own esterification/transesterification scheme and each having a unique blend of monomers. In the embodiment of a blend, the two or more resins are selected to achieve a weighted average of properties or amounts of monomers as would be achieved for a resin made from a single esterification/transesterification scheme. For example, the sulfonated copolyester resin may be a blend of about 35 wt% of a first resin made from the following molar fractions of the following monomers: about 0.67 ethylene glycol and about 0.33 neopentyl glycol based on the total moles of diols and about 0.54 dimethyl terephthalate, about 0.08 isophthalic acid, about 0.28 sebacic acid, and about 0.1 DMSIP based on the total moles of diacids and diesters, and about 65 wt% of a second resin made from the following molar fractions of the following monomers: only ethylene glycol on the diol side and about 0.31 dimethyl terephthalate, about 0.11 isophthalic acid, about 0.48 sebacic acid, and about 0.1 DMSIP.

Certain preferred aspects of this embodiment relate to the monomers used, and some not used, in making the copolyester resin. In an embodiment, the copolyester resin (prior to solvation) is in the form of pellets. Alternative forms include granules, chopped rods, or powder.

The composition of the disclosure, in particular the laminating adhesive, may also include other optional ingredients that do not adversely affect the composition or a cured composition resulting therefrom. Such optional ingredients are typically included in a coating composition to enhance composition aesthetics, to facilitate manufacturing, processing, handling, and application of the composition, and to further improve a particular functional property of a coating composition or a cured coating composition resulting therefrom.

Such optional ingredients include, for example, dyes, pigments, toners, extenders, fillers, lubricants, anticorrosion agents, flow control agents, thixotropic agents, dispersing agents, antioxidants, adhesion promoters, light stabilizers, and mixtures thereof. Biocide for preventing water based product from microbial attack could also be added. Surfactants may also be used to improve dispersion and limit any phase separation. Defoamers and thickeners may also be used in known ways. Each optional ingredient is included in a sufficient amount to serve its intended purpose, but not in such an amount to adversely affect a coating composition or a cured coating composition resulting therefrom.

Another useful optional ingredient is a lubricant, like a wax, which facilitates manufacture of flexible metal substrates or a metallized paper by imparting lubricity to sheets of coated metal substrate. A lubricant is preferably present in the coating composition in an amount of about 0.01% to about 2%, and preferably about 0.1 to about 2%, by weight of nonvolatile material. Preferred lubricants include, for example, carnauba wax and polyethylene type lubricants.

The disclosure further relates to articles of manufacture. The articles include wrappers, packaging, and food containers adhered together by a laminating adhesive. The aforementioned compositions are particularly well adapted for use as a laminating adhesive composition for use with a flexible packing.

A particular preferred embodiment may include a laminate formed from two or more compostable films adhered together with the laminating adhesive composition comprising a sulfonated copolyester which includes one or more pendant sulfonate groups.

In embodiments in which multiple ranges or multiple lower limits and multiple upper limits are provided for a parameter, the disclosure includes any range from any lower limit to any upper limit for that parameter.

Further included herein are clauses 1-27 of additional embodiments.

A 1^{st} clause includes a method of adhering a first substrate surface to a second substrate surface, comprising: (1) applying a laminating adhesive to the first substrate surface; and (2) contacting the first substrate surface with the second substrate surface to form a laminate, wherein the method is carried out at above ambient temperature (ambient temperature preferably about 25°C), preferably at least about 30°C, more preferably at least about 40°C, even more preferably no more than about 70°C, and most preferably no more than about 60°C,
wherein the laminating adhesive comprises an aqueous sulfonated copolyester dispersion.

A 2^{nd} clause includes the method of the 1^{st} clause wherein the aqueous sulfonated copolyester dispersion comprises a sulfonated copolyester resin, preferably an amorphous copolyester, and an organic solvent in an aqueous medium, preferably the organic solvent comprises a co-organic solvent, preferably the aqueous medium comprises deionized water, preferably the sulfonated copolyester resin has a Tg of less than about room temperature (about 25°C), more preferably less than about 10°C, even more preferably no more than 0°C, further preferably no more than about -10°C and/or preferably the sulfonated copolyester resin has a Tm of below about 50°C, more preferably below about 40°C, even more preferably no more than about 20°C, further preferably no more than about 10°C, even further preferably the sulfonated copolyester resin does not have a Tm.

In a 3^{rd} clause applicable to the method of either one of the 1^{st} or 2^{nd} clauses, the laminating adhesive comprises a water based adhesive.

In a 4^{th} clause applicable to the method of either one of the 2^{nd} or 3^{rd} clauses, the organic solvent selected from the group consisting of tert-butanol, isopropyl alcohol, acetone, and combinations thereof and/or the organic solvent is present in an amount corresponding to the aqueous sulfonated copolyester dispersion having a solids value of about 10 to 40% by weight, preferably about 12% to about 35%, more preferably at least 20% up to about 35% and/or a weight ratio of water: organic solvent comprises from about 90:10 to about 50:50, preferably at from about 80: 20 to about 60:40, more preferably from about 75:25 to about 65:35.

In a 5^{th} clause applicable to the method of any one of the 2^{nd}-4^{th} clauses, the sulfonated copolyester resin comprises the reaction product of: (a) at least one diol comprising ethylene glycol, preferably at least two diols comprising ethylene glycol at a mole fraction of at least about 0.25, preferably at least about 0.5, and most preferably at least about 0.7 based on the diols and (b) at least three diacids or diesters comprising: (i) at least one sulfomonomer at a mole fraction based on the diacids or diesters of at least 0.02, preferably at least about 0.03, more preferably at least about 0.05, more preferably at least about 0.07, more preferably at least about 0.08, and most preferably at least about 0.09 and at most about 0.2, more preferably at most about 0.15, and most preferably at most about 0.12; (ii) at least one aromatic diacid or diester; and (iii) at least one aliphatic diacid or diester, preferably a molar ratio of aromatic to aliphatic diacids or diesters is between about 75/25 and about 45/55, preferably between about 72/28 and about 48/52, more preferably between about 70/30 and about 50/50, and most preferably between about 68/32 and about 50/50.

In a 6^{th} clause applicable to the method of the 5^{th} clause, the at least one sulfomonomer is at least one of dimethyl-5-sulfoisophthalate sodium salt (DMSIP) or 5-sulfoisophalic acid (SIPA); the at least one aliphatic diacid or diester is selected from the group consisting of sebacic acid, azelaic acid, and adipic acid; the at least one aromatic diacid or diester is selected from the group consisting of at least one of isophthalic acid, dimethyl terephthalate, terephthalic acid, and dimethyl isophthalate; and the at least two diols further comprise at least one of neopentyl glycol, diethylene glycol, trimethylol propoane, and cyclohexane dimethanol.

In a 7^{th} clause applicable to the method of the 6^{th} clause, the at least one sulfomonomer is dimethyl-5-sulfoisophthalate sodium salt; the at least one aliphatic diacid or diester is sebacic acid; the at least one aromatic diacid or diester is isophthalic acid and dimethyl terephthalate; and the at least two diols comprise ethylene glycol and neopentyl glycol.

In an 8^{th} clause applicable to the method of the 7^{th} clause, the dimethyl-5-sulfoisophthalate sodium salt is present in an amount from about 0.07 to about 0.2, preferably from about 0.08 to about 0.15, and most preferably from about 0.09 to about 0.12 mole fraction based on the total amount of diacids and diesters; isophthalic acid is present in an amount from about 0.02 to about 0.2, preferably from about 0.03 to about 0.15, and most preferably from about 0.05 to about 0.1 mole fraction based on the total amount of diacids and diesters; the dimethyl terephthalate is present in an amount from about 0.25 to about 0.55, preferably from about 0.3 to about 0.5, and most preferably from about 0.35 to about 0.45 mole fraction based on the total amount of diacids and diesters; the sebacic acid is present in an amount from about 0.18 to about 0.4, preferably from about 0.2 to about 0.38, and most preferably from about 0.25 to about 0.35 mole fraction based on the total amount of diacids and diesters; the ethylene glycol is present in an amount from about 0.75 to about 0.97, preferably from about 0.8 to about 0.95, and most preferably from about 0.85 to about 0.92 mole fraction based on the total amount of diols; and the neopentyl glycol is present in an amount from about 0.03 to about 0.25, preferably from about 0.05 to about 0.2, and most preferably from about 0.08 to about 0.15 mole fraction based on the total amount of diols.

In a 9^{th} clause applicable to the method of either one of the 7^{th} or 8^{th} clauses, a molar ratio of ethylene glycol: neopentyl glycol is from about 3:1 to about 20:1, preferably between about 4:1 to about 15:1, more preferably between about 5:1 to about 12:1, and most preferably between about 7:1 and about 17:2.

A 10^{th} clause includes a method of adhering a first substrate surface to a second substrate surface, comprising:
applying a laminating adhesive to the first substrate surface; and
contacting the first substrate surface with the second substrate surface to form a laminate, wherein the method is optionally carried out at ambient temperature or
conventional laminating temperature, preferably the ambient temperature comprises at least about 5°C, more preferably at least about 10°C, even more preferably at least about 20°C, further preferably no more than about 60°C, and most preferably no more than about 50°C,
wherein the laminating adhesive comprises a blend of an aqueous sulfonated copolyester dispersion and a water soluble crosslinker,
preferably the water soluble crosslinker comprises, or is, at least one of
   a polyfunctional isocyanate having a functionality of at least about 2.0, preferably at least about 2.2, more preferably at least about 2.5, further preferably more than about 2.7, even further preferably at least about 2.9 and most preferably at least about 3.0,
   a polyfunctional epoxy having a functionality at least about 2.0, preferably at least about 2.2, more preferably at least about 2.5, further preferably more than about 2.7, even further preferably at least about 2.9 and most preferably at least about 3.0, and
   combinations thereof,
preferably a wt% of the water soluble crosslinker comprises up to about 10 wt%, preferably up to about 5 wt%, more preferably less than about 3 wt%, further preferably at least about 1 wt% (such as from about 1 wt% to about 10 wt%, preferably from about 1 wt% to about 5 wt%, more preferably from about 1 wt% to less than about 3 wt%), based on the weight of the aqueous sulfonated copolyester dispersion.

In an 11^{th} clause applicable to the method of the 10^{th} clause, the aqueous sulfonated copolyester dispersion comprises, or is, a sulfonated copolyester resin and an organic solvent in an aqueous medium, optionally the organic solvent comprises a co-organic solvent, preferably the aqueous medium comprises, or is, deionized water, preferably the sulfonated copolyester resin comprises, or is, an amorphous copolyester, preferably the sulfonated copolyester resin has a Tg of less than about room temperature (about 25°C), more preferably less than about 10°C, even more preferably no more than 0°C, further preferably no more than about -10°C and/or preferably the sulfonated copolyester resin has a Tm of below about 50°C, more preferably below about 40°C, even more preferably no more than about 20°C, further preferably no more than about 10°C, even further preferably the sulfonated copolyester resin does not have a Tm.

In a 12^{th} clause applicable to the method of either one of the 10^{th} or 11^{th} clauses, the laminating adhesive comprises a water based adhesive.

In a 13^{th} clause applicable to the method of either one of the 11^{th} or 12^{th} clauses, the organic solvent is selected from the group consisting of tert-butanol, isopropyl alcohol, acetone, and combinations thereof.

In a 14^{th} clause applicable to the method of any one of the 11^{th}- 13^{th} clauses, the organic solvent is present in an amount corresponding to the aqueous sulfonated copolyester dispersion having a solids value of about 10% to 40% by weight, preferably about 12% to about 35%, more preferably at least about 20% up to about 35% and/or a weight ratio of water: organic solvent comprises from about 90:10 to about 50:50, preferably from about 80: 20 to about 60:40, more preferably from about 75:25 to about 65:35.

In a 15^{th} clause applicable to the method of any one of the 11^{th}-14^{th} clauses, the sulfonated copolyester in the aqueous sulfonated copolyester dispersion comprises the reaction product of: (a) at least one diol comprising ethylene glycol, preferably at least two diols comprising ethylene glycol at a mole fraction of at least about 0.25, preferably at least about 0.5, and most preferably at least about 0.7, based on the diols and (b) at least three diacids or diesters comprising: (i) at least one sulfomonomer at a mole fraction based on the diacids or diesters of at least 0.02, preferably at least about 0.03, more preferably at least about 0.05, more preferably at least about 0.07, more preferably at least about 0.08, and most preferably at least about 0.09 and at most about 0.2, more preferably at most about 0.15, and most preferably at most about 0.12 (such as from 0.02 to about 0.2, preferably from about 0.03 to about 0.2, more preferably from about 0.05 to about 0.15, more preferably from about 0.07 to about 0.15, more preferably from about 0.08 to about 0.12, more preferably from about 0.09 to about 0.12); (ii) at least one aromatic diacid or diester; and (iii) at least one aliphatic diacid or diester, preferably a molar ratio of aromatic to aliphatic diacids or diesters is between about 75/25 and about 45/55, preferably between about 72/28 and about 48/52, more preferably between about 70/30 and about 50/50, and most preferably between about 68/32 and about 50/50.

In a 16^{th} clause applicable to the method of the 15^{th} clause,
the at least one sulfomonomer comprises, or is, at least one of dimethyl-5-sulfoisophthalate sodium salt (DMSIP) or 5-sulfoisophalic acid (SIPA);
the at least one aliphatic diacid or diester comprises at least one, or is selected from the group consisting of, sebacic acid, azelaic acid, and adipic acid;
the at least one aromatic diacid or diester comprises at least one of, or is selected from the group consisting of at least one of, isophthalic acid, dimethyl terephthalate, terephthalic acid, and dimethyl isophthalate; and
the at least two diols further comprise at least one of neopentyl glycol, diethylene glycol, trimethylol propane, and cyclohexane dimethanol.

In a 17^{th} clause applicable to the method of the 16^{th} clause,
the at least one sulfomonomer comprises, or is, dimethyl-5-sulfoisophthalate sodium salt; the at least one aliphatic diacid or diester comprises, or is, sebacic acid;
the at least one aromatic diacid or diester comprises, or is, isophthalic acid and dimethyl terephthalate; and
the at least two diols comprise ethylene glycol and neopentyl glycol.

In an 18^{th} clause applicable to the method of the 17^{th} clause,
the dimethyl-5-sulfoisophthalate sodium salt is present in an amount from about 0.07 to about 0.2, preferably from about 0.08 to about 0.15, and most preferably from about 0.09 to about 0.12 mole fraction based on the total amount of diacids and diesters;
the isophthalic acid is present in an amount from about 0.02 to about 0.2, preferably from about 0.03 to about 0.15, and most preferably from about 0.05 to about 0.1 mole fraction based on the total amount of diacids and diesters;
the dimethyl terephthalate is present in an amount from about 0.25 to about 0.55, preferably from about 0.3 to about 0.5, and most preferably from about 0.35 to about 0.45 mole fraction based on the total amount of diacids and diesters;
the sebacic acid is present in an amount from about 0.18 to about 0.4, preferably from about 0.2 to about 0.38, and most preferably from about 0.25 to about 0.35 mole fraction based on the total amount of diacids and diesters;
the ethylene glycol is present in an amount from about 0.75 to about 0.97, preferably from about 0.8 to about 0.95, and most preferably from about 0.85 to about 0.92 mole fraction based on the total amount of diols; and
the neopentyl glycol is present in an amount from about 0.03 to about 0.25, preferably from about 0.05 to about 0.2, and most preferably from about 0.08 to about 0.15 mole fraction based on the total amount of diols.

In a 19^{th} clause applicable to the method of either one of the 17^{th} or 18^{th} clauses, a molar ratio of ethylene glycol: neopentyl glycol is from about 3:1 to about 20:1, preferably between about 4: 1 to about 15:1, more preferably between about 5:1 to about 12:1, and most preferably between about 7:1 and about 17:2.

A 20^{th} clause includes an aqueous dispersion composition comprising (a) a sulfonated amorphous copolyester and (b) a water soluble crosslinker, preferably the water soluble crosslinker comprises at least one of: (i) a polyfunctional isocyanate having a functionality of at least about 2.0, preferably at least about 2.2, more preferably at least about 2.5, further preferably more than about 2.7, even further preferably at least about 2.9 and most preferably at least about 3.0; (ii) a polyfunctional epoxy having a functionality at least about 2.0, preferably at least about 2.2, more preferably at least about 2.5, further preferably more than about 2.7, even further preferably at least about 2.9 and most preferably at least about 3.0; and (iii) combinations thereof.

In a 21^{st} clause applicable to the aqueous dispersion composition of the 20^{th} clause, the sulfonated amorphous copolyester comprises the reaction product of: (a) at least two diols comprising ethylene glycol at a mole fraction of at least about 0.25, preferably at least about 0.5, and most preferably at least about 0.7 based on the diols and (b) at least three diacids or diesters comprising: (i) at least one sulfomonomer at a mole fraction based on the diacids or diesters of at least 0.02, preferably at least about 0.03, more preferably at least about 0.05, more preferably at least about 0.07, preferably at least about 0.08, and most preferably at least about 0.09; (ii) at least one aromatic diacid or diester; and (iii) at least one aliphatic diacid or diester, wherein preferably the ratio of aromatic to aliphatic diacids or diesters is between about 75/25 and about 45/55, preferably between about 72/28 and about 48/52, more preferably between about 70/30 and about 50/50, and most preferably between about 68/32 and about 50/50 and wherein preferably the sulfonated amorphous copolyester has a glass transition temperature between about -25°C and about 15°C, preferably between about -18°C and about 10°C, and most preferably between about -10°C and about 5°C or between about -20°C and about -5°C.

In a 22^{nd} clause applicable to the aqueous dispersion composition of either one of the 20^{th} or 21^{st} clauses, the aqueous dispersion composition further comprises an organic solvent, preferably the organic solvent comprises at least one of tert-butanol, acetone, isopropyl alcohol and combinations thereof.

In a 23^{rd} clause applicable to the aqueous dispersion composition of the 22^{nd} clause, the organic solvent is present in an amount corresponding to a value of about 10% to about 40% solids by weight, and the weight ratio of water: organic solvent is from about 90:10 to about 50:50, preferably at least about 60:40 (such as from about 90:10 to about 60:40).

A 24^{th} clause includes a laminate formed by the method of any one of the 1^{st}-19^{th} clauses.

A 25^{th} clause includes a composition comprising
a. a sulfonated amorphous copolyester resin preferably comprising: (a) residues of at least two diols comprising ethylene glycol and (b) residues of at least three diacids or diesters comprising: (i) at least one sulfomonomer; (ii) at least one aromatic diacid or diester; and (iii) at least one aliphatic diacid or diester, wherein:
   the copolyester resin has preferably a bound mole fraction of the ethylene glycol residues of between about 0.5 to about 0.9, and most preferably at least about 0.65 to about 0.85 based on the diol residues;
   the bound ratio of residues of aromatic to aliphatic diacids or diesters is preferably between about 75/25 and about 45/55, preferably between about 72/28 and about 48/52, more preferably between about 70/30 and about 50/50, and most preferably between about 68/32 and about 50/50; and
b. a water soluble crosslinker, preferably the water soluble crosslinker comprises at least one of
   (i) a polyfunctional isocyanate having a functionality of at least about 2.0, preferably at least about 2.2, more preferably at least about 2.5, further preferably more than about 2.7, even further preferably at least about 2.9 and most preferably at least about 3.0,
   (ii) a polyfunctional epoxy having a functionality at least about 2.0, preferably at least about 2.2, more preferably at least about 2.5, further preferably more than about 2.7, even further preferably at least about 2.9 and most preferably at least about 3.0 and
   (iii) combinations thereof;
   wherein the sulfonated amorphous copolyester resin has preferably a glass transition temperature between about -25°C and about 15°C, preferably between about -18°C and about 10°C.

A 26^{th} clause includes a laminating adhesive composition comprising a blend of an aqueous sulfonated copolyester dispersion and a water soluble crosslinker, preferably the water soluble crosslinker comprises at least one of: a polyfunctional isocyanate having a functionality of at least about 2.0, preferably at least about 2.2, more preferably at least about 2.5, further preferably more than about 2.7, even further preferably at least about 2.9 and most preferably at least about 3.0; a polyfunctional epoxy having a functionality of at least about 2.0, preferably at least about 2.2, more preferably at least about 2.5, further preferably more than about 2.7, even further preferably at least about 2.9 and most preferably at least about 3.0; and combinations thereof.

In a 27^{th} clause applicable to the laminating adhesive composition of the 26^{th} clause, the aqueous sulfonated copolyester dispersion comprises a sulfonated copolyester resin and an organic solvent in an aqueous medium, optionally the organic solvent comprises co-organic solvent, preferably the aqueous medium comprises, or is, deionized water, preferably the sulfonated copolyester resin has a Tg of less than about room temperature (about 25°C), more preferably less than about 10°C, even more preferably no more than 0°C, further preferably no more than about -10°C and/or preferably the sulfonated copolyester resin has a Tm of below about 50°C, more preferably below about 40°C, even more preferably no more than about 20°C, further preferably no more than about 10°C, even further preferably the sulfonated copolyester resin does not have a Tm.

### EXAMPLES

The following examples demonstrate several aspects of certain preferred embodiments of the present disclosure, and are not to be construed as limitations thereof.

A Viscotek Model Y501 C Relative Viscometer was used to determine the inherent viscosity.

Extended storage stability may be determined by the following method. In this method, the aqueous dispersion, with or without crosslinker, is stored in a see through closed container, such as but not limited to a container with a graduated scale indicating the amount of the dispersion present in the container. The container is allowed to sit for a set number of days such as but not limited to any one of 30 days, 45 days, 60 days, 90 days, etc. After the set number of days, the contents of the container is viewed to determine the amount of phase separation. Phase separation is determined by visual inspection. Phase separation occurs by observing a top layer of water formed on the dispersion.

Upon the inspection, if the water layer has a predetermined thickness, e.g., at least 1", a remix step is performed. To perform the remix step agitation is applied to the contents until the contents visually have at least a reasonably substantially uniform appearance. If after 48 hours after the remix step the contents of the container still has the reasonably substantially uniform appearance the dispersion is exhibiting sufficient shelf stability. The dispersion is not exhibiting shelf stability once remixing the dispersion does not result in the reasonably substantially uniform appearance.

### Example A- Sulfonated Copolyester 1 ("CP1")

To a 2 liter glass flask equipped with a distillation column was added dimethyl terephthalate, (476.62 grams), dimethyl-5-sulfoisophthalate sodium salt (186.43 grams), ethylene glycol ("EG") (339.17 grams), neopentyl glycol ("NPG") (73.23 grams), diethylene glycol ("DEG") (93.50 grams), Irganox 1010 (5.2 grams) (an antioxidant), and zinc acetate dihydrate (0.56 grams) (a catalyst). The reaction mixture was stirred and heated to 204°C, under a slow nitrogen purge. After reaching 204°C the reaction mixture was stirred for about 1.5 hours with a slight nitrogen purge, until the distillation temperature at the top of the column dropped below 60°C. About 145 grams of a colorless distillate was collected over this heating cycle. After the heating cycle, isophthalic acid (101.42 grams), sebacic acid (525.68 grams), ethylene glycol (145.36 grams), neopentyl glycol (31.38 grams), and germanium dioxide (0.28 grams) (a catalyst) were added to the flask. The reaction mixture was then heated to 200°C over a period of 0.4 hours with stirring under a slow nitrogen purge. The resulting reaction mixture was held at 200°C under a slight nitrogen purge for about 2 hours. Once the distillation temperature at the top of the column dropped below 90°C, the reaction mixture was heated to 255° C, which took about 1.5 hours. Additionally during the heating, the contents of the flask were stirred under a slight nitrogen purge. About 135 grams of a colorless distillate was collected over this heating cycle. The reaction mixture was then staged to full vacuum with stirring at 255° C. The resulting reaction mixture was stirred for 2.25 hours under full vacuum, (pressure less than 5 torr). The vacuum was then released with nitrogen and the reaction mass was transferred to a PTFE tray and allowed to cool to room temperature. About an additional 70 grams of distillate was recovered and 1.30 kilograms of a solid product was recovered. An inherent viscosity (IV) of the sulfonated copolyester was calculated as 0.41 dL/g. The sulfonated copolyester also underwent differential scanning calorimetry (DSC) analysis. A glass transition temperature (Tg) was measured at -15.49°C.

1-H NMR spectroscopy was conducted on CP1 formed in Example A and the following Table 1 shows the resulting diol residues recorded in terms of wt%. As the 1-H NMR was performed in CDCl₃, accurate results of the diacid content could not be obtained.

**TABLE 1**

| **Copolyester** | **IV (dL/g)** | **Tg (°C)** | **EG (Ethylene glycol) (wt %)** | **NPG (Neopentyl glycol) (wt %)** | **DEG (Diethylene glycol) (wt %)** |
|---|---|---|---|---|---|
| **CP1** | 0.41 | -15.49 | 0.638 | 0.078 | 0.284 |

A composition of Sulfonated Copolyester 1 ("CP1") was dispersed in either water or water/organic solvent mixture to about 30% solids as described below in Examples 1-12. When a water/organic solvent mixture was used, the water included an organic solvent of isopropyl alcohol or tert-butanol in a weight ratio of about 3:1. A crosslinker as disclosed below in Table 2 was added to the composition. The composition was cooled to room temperature and applied to either 12.5 µm PET or 42 µm cellulose film and laminated to one of 50 µm LLDPE, 25 µm metallized PLA or 57 µm polybutylene succinate (PBS) film. The bond strength was determined by the bond strength test conducted on an Instron 3343 tensile tester following ASTM D903, at ambient conditions (25°C and 50% RH), with a peel speed of 12 inches/minute. PET and LLDPE are not compostable under industrial composting environment, but adhesion data was collected as a reference to compare them to compostable laminate structure.

0-3 wt% of a water soluble crosslinker Purethane^{®} C-CAT 108 (a polyfunctional isocyanate having a functionality of 3.1 from Bostik Inc.) was added to dispersions, thereby forming examples of different embodiments of the disclosed laminating adhesive. The embodiments of the laminating adhesive were applied to PET and a compostable cellulose film using a #3 Mayer rod. The adhesive coated PET and cellulose film samples were dried at 75°C for 3 minutes. On each film sample a clear coating having a coat weight of about 1.5 lbs/ream was obtained. The resulting adhesive coated PET was laminated to LLDPE film at ambient temperature and cellulose film was laminated to metallized polylactic acid (PLA) and polybutylene succinate (PBS) films at ambient temperature. The laminated films were stored at ambient temperature and pressure and the adhesion was measured after 1, 3 and 7 days after cure using the Instron T-peel test as indicated in Table 2. Compostability was measured using the method described in ASTM D6400 and ASTM D5338 by measuring the amount of carbon dioxide generated during the composting process and the % biodegradation was calculated based on the carbon content of the initial adhesive samples.

### Example 1

150 g of CP1 was added to a 2 liter reactor. An aqueous solution of CP1 was formed by adding 350 g of deionized water to the reactor. The contents of the reactor were agitated at 97°C until CP1 was completely dispersed, visually confirmed by the contents of the reactor appearing as a milky white dispersion. No crosslinker was added for the adhesive coating and lamination.

### Example 2

150 g of CP1 was added to a 2 liter reactor. An aqueous solution of CP1 was formed by adding 350 g of deionized water to the reactor. The contents of the reactor were agitated at 97°C until CP1 was completely dispersed, visually confirmed by the contents of the reactor appearing as a milky white dispersion. 1 wt% of Purethane^{®} C-CAT 108 (product of Bostik Inc.), a water soluble polyisocyanate crosslinker, was added before adhesive coating and lamination.

### Example 3

150 g of CP1 was added to a 2 liter reactor. An aqueous solution of CP1 was formed by adding 350 g of deionized water to the reactor. The contents of the reactor were agitated at 97°C until CP1 was completely dispersed, visually confirmed by the contents of the reactor appearing as a milky white dispersion. 2 wt% of Purethane^{®} C-CAT 108 (product of Bostik Inc.), a water soluble polyisocyanate crosslinker, was added before adhesive coating and lamination.

### Example 4

150 g of CP1 was added to a 2 liter reactor. An aqueous solution of CP1 was formed by adding 350 g of deionized water to the reactor. The contents of the reactor were agitated at 97°C until CP1 was completely dispersed, visually confirmed by the contents of the reactor appearing as a milky white dispersion. 3 wt% of Purethane^{®} C-CAT 108 (product of Bostik Inc.), a water soluble polyisocyanate crosslinker, was added before adhesive coating and lamination.

### Example 5

150 g of CP1 was added to a 2 liter reactor. An aqueous solution of CP1 and an organic solvent was formed by adding 258.3 g of deionized water and 91.7 g of isopropyl alcohol (organic solvent) to the reactor. The contents of the reactor were agitated until CP1 was completely dispersed, visually confirmed by the contents of the reactor appearing as a translucent bluish dispersion. The resulting dispersion was stable, exhibiting extended storage of at least about 30 days. No crosslinker was added for the adhesive coating and lamination.

### Example 6

150 g of CP1 was added to a 2 liter reactor. An aqueous solution of CP1 and an organic solvent was formed by adding 258.3 g of deionized water and 91.7 g of isopropyl alcohol (organic solvent) to the reactor. The contents of the reactor were agitated until CP1 was completely dispersed, visually confirmed by the contents of the reactor appearing as a translucent bluish dispersion. The resulting dispersion was stable, exhibiting extended storage of at least about 30 days. 1 wt% of Purethane^{®} C-CAT 108 (product of Bostik Inc.), a water soluble polyisocyanate crosslinker, was added before adhesive coating and lamination.

### Example 7

150 g of CP1 was added to a 2 liter reactor. An aqueous solution of CP1 and an organic solvent was formed by adding 258.3 g of deionized water and 91.7 g of isopropyl alcohol (organic solvent) to the reactor. The contents of the reactor were agitated until CP1 was completely dispersed, visually confirmed by the contents of the reactor appearing as a translucent bluish dispersion. The resulting dispersion was stable, exhibiting extended storage of at least about 30 days. 2 wt% of Purethane^{®} C-CAT 108 (product of Bostik Inc.), a water soluble polyisocyanate crosslinker, was added before adhesive coating and lamination.

### Example 8

150 g of CP1 was added to a 2 liter reactor. An aqueous solution of CP1 and an organic solvent was formed by adding 258.3 g of deionized water and 91.7 g of isopropyl alcohol (organic solvent) to the reactor. The contents of the reactor were agitated until CP1 was completely dispersed, visually confirmed by the contents of the reactor appearing as a translucent bluish dispersion. The resulting dispersion was stable, exhibiting extended storage of at least about 30 days. 3 wt% of Purethane^{®} C-CAT 108 (product of Bostik Inc.), a water soluble polyisocyanate crosslinker, was added before adhesive coating and lamination.

### Example 9

150 g of CP1 was added to a 2 liter reactor. An aqueous solution of CP1 and an organic solvent was formed by adding 258.3 g of deionized water and 91.7 g of tert-butanol (organic solvent) to the reactor. The contents of the reactor were agitated until CP1 was completely dispersed, visually confirmed by the contents of the reactor appearing as a translucent bluish dispersion. The resulting dispersion was stable exhibiting extended storage of at least about 30 days. No crosslinker was added for the adhesive coating and lamination.

### Example 10

150 g of CP1 was added to a 2 liter reactor. An aqueous solution of CP1 and an organic solvent was formed by adding 258.3 g of deionized water and 91.7 g of tert-butanol (organic solvent) to the reactor. The contents of the reactor were agitated until CP1 was completely dispersed, visually confirmed by the contents of the reactor appearing as a translucent bluish dispersion. The resulting dispersion was stable, exhibiting extended storage of at least about 30 days. 1 wt% of Purethane^{®} C-CAT 108 (product of Bostik Inc.), a water soluble polyisocyanate crosslinker, was added before adhesive coating and lamination.

### Example 11

150 g of CP1 was added to a 2 liter reactor. An aqueous solution of CP1 and an organic solvent was formed by adding 258.3 g of deionized water and 91.7 g of tert-butanol (organic solvent) to the reactor. The contents of the reactor were agitated until CP1 was completely dispersed, visually confirmed by the contents of the reactor appearing as a translucent bluish dispersion. The resulting dispersion was stable, exhibiting extended storage of at least about 30 days. 2 wt% of Purethane^{®} C-CAT 108 (product of Bostik Inc.), a water soluble polyisocyanate crosslinker, was added before adhesive coating and lamination.

### Example 12

150 g of CP1 was added to a 2 liter reactor. An aqueous solution of CP1 and an organic solvent was formed by adding 258.3 g of deionized water and 91.7 g of tert-butanol (organic solvent) to the reactor. The contents of the reactor were agitated until CP1 was completely dispersed, visually confirmed by the contents of the reactor appearing as a translucent bluish dispersion. The resulting dispersion was stable, exhibiting extended storage of at least about 30 days. 3 wt% of Purethane^{®} C-CAT 108 (product of Bostik Inc.), a water soluble polyisocyanate crosslinker, was added before adhesive coating and lamination.

**Table 2. Bond strength of the laminated films**

| Examples | Carrier | Crosslinker | Laminate structure | Bond strength (gli) | | |
|---|---|---|---|---|---|---|
| | | | | Day 1 | Day 3 | Day 7 |
| Example 1 | Water | 0 wt% | PET/LLDPE | 69 | 58 | 70 |
| | | | Cellulose/PLA | 139 | 113 | 63 |
| | | | Cellulose/PBS | 59 | 48 | 56 |
| Example 2 | Water | 1 wt% | PET/LLDPE | 72 | 74 | 91 |
| | | | Cellulose/PLA | 276 | 207 | 165 |
| | | | Cellulose/PBS | 173 | 189 | 155 |
| Example 3 | Water | 2 wt% | PET/LLDPE | 302 | 252 | 285 |
| | | | Cellulose/PLA | 334 | 339 | 313 |
| | | | Cellulose/PBS | 358 | 239 | 326 |
| Example 4 | Water | 3 wt% | PET/LLDPE | 321 | 296 | 278 |
| | | | Cellulose/PLA | 448 | 353 | 309 |
| | | | Cellulose/PBS | 334 | 247 | 313 |
| Example 5 | Water/IPA | 0 wt% | PET/LLDPE | 68 | 80 | 72 |
| | | | Cellulose/PLA | 245 | 205 | 167 |
| | | | Cellulose/PBS | 145 | 214 | 240 |
| Example 6 | Water/IPA | 1 wt% | PET/LLDPE | 168 | 180 | 172 |
| | | | Cellulose/PLA | 262 | 224 | 205 |
| | | | Cellulose/PBS | 164 | 227 | 250 |
| Example 7 | Water/IPA | 2 wt% | PET/LLDPE | Film destruction | Film destruction | Film destruction |
| | | | Cellulose/PLA | 216 | 222 | 233 |
| | | | Cellulose/PBS | 263 | 301 | 319 |
| Example 8 | Water/IPA | 3 wt% | PET/LLDPE | Film destruction | Film destruction | Film destruction |
| | | | Cellulose/PLA | 303 | 224 | 210 |
| | | | Cellulose/PBS | 149 | 330 | 264 |
| Example 9 | Water/tert-butanol | 0 wt% | PET/LLDPE | Film destruction | Film destruction | Film destruction |
| | | | Cellulose/PLA | 444 | 425 | 449 |
| | | | Cellulose/PBS | 103 | 117 | 218 |
| Example 10 | Water/tert-butanol | 1 wt% | PET/LLDPE | Film destruction | Film destruction | Film destruction |
| | | | Cellulose/PLA | 450 | 406 | 348 |
| | | | Cellulose/PBS | 257 | 360 | 444 |
| Example 11 | Water/tert-butanol | 2 wt% | PET/LLDPE | Film destruction | Film destruction | Film destruction |
| | | | Cellulose/PLA | 397 | 348 | 277 |
| | | | Cellulose/PBS | 296 | 751 | 527 |
| Example 12 | Water/tert-butanol | 3 wt% | PET/LLDPE | Film destruction | Film destruction | Film destruction |
| | | | Cellulose/PLA | 431 | 360 | 303 |
| | | | Cellulose/PBS | 720 | 545 | Film destruction |

The data in Table 2 demonstrates that bond strength may increase with the inclusion of the organic solvent and the amount of the organic solvent. The data in Table 2 also demonstrates that in the compostable laminate structures, the dispersions made with the copolyester and crosslinker from Examples 2 to 4, 6 to 8 and 10 to 12 provide excellent adhesion to compostable substrates. It was also found that in general added crosslinker further improves the adhesion to the compostable substrates as is shown in Table 2.

**TABLE 3**

| Copolyester | Crosslinker | % Compostability | Days |
|---|---|---|---|
| CP1 | 0 wt% | 97 | 90 |
| | 1 wt% | 91 | 90 |
| | 2wt% | 92 | 90 |
| | 3 wt% | 85 | 90 |

Example 9 to Example 12 were coated on release paper and dried in the oven at 50°C for 3 days followed by 7 days at ambient temperature to ensure completely cured adhesives. These cured adhesives were then tested for compostability following the procedure described in ASTM D6400/ASTM D5338. The data in Table 3 demonstrates that the copolyester and copolyester with crosslinker up to 2 wt% are readily biodegradable/compostable under industrial composting conditions which are described by ASTM D6400/ASTM D5338. The copolyester with 0-2 wt% crosslinker samples passed the ASTM D6400/ASTM D5338 testing and showed greater than 90% biodegradation within 90 days.

While not to be bound by theory it is believed that the 3 wt% crosslinker data in Table 3 represents the formation of urethane linkage in the dispersion due to the crosslinker being isocyanate functional, which it is known urethane linkages are not compostable and have a negative impact on compostability of the resulting cured laminating adhesive.

## Claims

1. A method of adhering a first substrate surface to a second substrate surface, comprising:
applying a laminating adhesive to the first substrate surface; and
contacting the first substrate surface with the second substrate surface to form a laminate, wherein the method is optionally carried out at ambient temperature or
conventional laminating temperature, preferably the ambient temperature comprises at least about 5°C, more preferably at least about 10°C, even more preferably at least about 20°C, further preferably no more than about 60°C, and most preferably no more than about 50°C,
wherein the laminating adhesive comprises a blend of an aqueous sulfonated copolyester dispersion and a water soluble crosslinker, preferably the water soluble crosslinker comprises at least one of
a polyfunctional isocyanate having a functionality of at least about 2.0, preferably at least about 2.2, more preferably at least about 2.5, further preferably more than about 2.7, even further preferably at least about 2.9 and most preferably at least about 3.0,
a polyfunctional epoxy having a functionality at least about 2.0, preferably at least about 2.2, more preferably at least about 2.5, further preferably more than about 2.7, even further preferably at least about 2.9 and most preferably at least about 3.0 and
combinations thereof,
preferably a wt% of the water soluble crosslinker comprises up to about 10 wt%,
preferably up to about 5 wt%, more preferably less than about 3 wt%, further preferably at least about 1 wt%, based on the weight of the aqueous sulfonated copolyester dispersion.

2. The method of claim 1, wherein the aqueous sulfonated copolyester dispersion comprises a sulfonated copolyester resin and an organic solvent in an aqueous medium, preferably the organic solvent comprises a co-organic solvent, preferably the aqueous medium comprises deionized water, preferably the sulfonated copolyester resin comprises an amorphous copolyester, preferably the sulfonated copolyester resin has a Tg of less than about room temperature (about 25°C), more preferably less than about 10°C, even more preferably no more than 0°C, further preferably no more than about -10°C and/or preferably the sulfonated copolyester resin has a Tm of below about 50°C, more preferably below about 40°C, even more preferably no more than about 20°C, further preferably no more than about 10°C, even further preferably the sulfonated copolyester resin does not have a Tm.

3. The method of claim 1 or 2, wherein the laminating adhesive comprises a water based adhesive.

4. The method of claim 2 or 3, wherein the organic solvent selected from the group consisting of tert-butanol, isopropyl alcohol, acetone, and combinations thereof and/or the organic solvent present in an amount corresponding to the aqueous sulfonated copolyester dispersion having a solids value of about 10% to 40% by weight, preferably about 12% to about 35%, more preferably at least about 20% up to about 35% and/or a weight ratio of water: organic solvent comprises from about 90:10 to about 50:50, preferably from about 80: 20 to about 60:40, more preferably from about 75:25 to about 65:35.

5. The method of any one of claims 2-4, wherein the sulfonated copolyester in the aqueous sulfonated copolyester dispersion comprises the reaction product of: (a) at least two diols comprising ethylene glycol at a mole fraction of at least about 0.25, preferably at least about 0.5, and most preferably at least about 0.7 based on the diols and (b) at least three diacids or diesters comprising: (i) at least one sulfomonomer at a mole fraction based on the diacids or diesters of at least 0.02, preferably at least about 0.03, more preferably at least about 0.05, more preferably at least about 0.07, more preferably at least about 0.08, and most preferably at least about 0.09 and at most about 0.2, more preferably at most about 0.15, and most preferably at most about 0.12; (ii) at least one aromatic diacid or diester; and (iii) at least one aliphatic diacid or diester, preferably a molar ratio of aromatic to aliphatic diacids or diesters is between about 75/25 and about 45/55, preferably between about 72/28 and about 48/52, more preferably between about 70/30 and about 50/50, and most preferably between about 68/32 and about 50/50.

6. The method of claim 5, wherein:
the at least one sulfomonomer is at least one of dimethyl-5-sulfoisophthalate sodium salt (DMSIP) or 5-sulfoisophalic acid (SIPA);
the at least one aliphatic diacid or diester is selected from the group consisting of sebacic acid, azelaic acid, and adipic acid;
the at least one aromatic diacid or diester is selected from the group consisting of at least one of isophthalic acid, dimethyl terephthalate, terephthalic acid, and dimethyl isophthalate; and
the at least two diols further comprise at least one of neopentyl glycol, diethylene glycol, trimethylol propane, and cyclohexane dimethanol.

7. The method of claim 6, wherein:
the at least one sulfomonomer is dimethyl-5-sulfoisophthalate sodium salt;
the at least one aliphatic diacid or diester is sebacic acid;
the at least one aromatic diacid or diester is isophthalic acid and dimethyl terephthalate; and
the at least two diols comprise ethylene glycol and neopentyl glycol;
wherein, preferably:
the dimethyl-5-sulfoisophthalate sodium salt is present in an amount from about 0.07 to about 0.2, preferably from about 0.08 to about 0.15, and most preferably from about 0.09 to about 0.12 mole fraction based on the total amount of diacids and diesters;
the isophthalic acid is present in an amount from about 0.02 to about 0.2, preferably from about 0.03 to about 0.15, and most preferably from about 0.05 to about 0.1 mole fraction based on the total amount of diacids and diesters;
the dimethyl terephthalate is present in an amount from about 0.25 to about 0.55,
preferably from about 0.3 to about 0.5, and most preferably from about 0.35 to about 0.45 mole fraction based on the total amount of diacids and diesters;
the sebacic acid is present in an amount from about 0.18 to about 0.4, preferably from about 0.2 to about 0.38, and most preferably from about 0.25 to about 0.35 mole fraction based on the total amount of diacids and diesters;
the ethylene glycol is present in an amount from about 0.75 to about 0.97, preferably from about 0.8 to about 0.95, and most preferably from about 0.85 to about 0.92 mole fraction based on the total amount of diols; and
the neopentyl glycol is present in an amount from about 0.03 to about 0.25, preferably from about 0.05 to about 0.2, and most preferably from about 0.08 to about 0.15 mole fraction based on the total amount of diols.

8. The method of claim 7, wherein a molar ratio of ethylene glycol: neopentyl glycol is from about 3: 1 to about 20:1, preferably between about 4: 1 to about 15:1, more preferably between about 5:1 to about 12: 1, and most preferably between about 7:1 and about 17:2.

9. An aqueous dispersion composition comprising (a) a sulfonated amorphous copolyester and (b) a water soluble crosslinker, preferably the water soluble crosslinker comprises at least one of (i) a polyfunctional isocyanate having a functionality of at least about 2.0, preferably at least about 2.2, more preferably at least about 2.5, further preferably more than about 2.7, even further preferably at least about 2.9 and most preferably at least about 3.0, (ii) a polyfunctional epoxy having a functionality at least about 2.0, preferably at least about 2.2, more preferably at least about 2.5, further preferably more than about 2.7, even further preferably at least about 2.9 and most preferably at least about 3.0 and (iii) combinations thereof.

10. The aqueous dispersion composition of claim 9 wherein the sulfonated amorphous copolyester comprises the reaction product of: (a) at least two diols comprising ethylene glycol at a mole fraction of at least about 0.25, preferably at least about 0.5, and most preferably at least about 0.7 based on the diols and (b) at least three diacids or diesters comprising: (i) at least one sulfomonomer at a mole fraction based on the diacids or diesters of at least 0.02, preferably at least about 0.03, more preferably at least about 0.05, more preferably at least about 0.07, preferably at least about 0.08, and most preferably at least about 0.09; (ii) at least one aromatic diacid or diester; and (iii) at least one aliphatic diacid or diester, wherein the ratio of aromatic to aliphatic diacids or diesters is between about 75/25 and about 45/55, preferably between about 72/28 and about 48/52, more preferably between about 70/30 and about 50/50, and most preferably between about 68/32 and about 50/50 and the sulfonated amorphous copolyester has a glass transition temperature between about -25°C and about 15°C, preferably between about -18°C and about 10°C, and most preferably between about - 10°C and about 5°C or between about -20°C and about -5°C.

11. The aqueous dispersion composition of either one of claims 9 or 10 further comprising an organic solvent, preferably the organic solvent comprises at least one of *tert-*butanol, acetone, isopropyl alcohol and combinations thereof and/or wherein the organic solvent is present in an amount corresponding to a value of about 10% to about 40% solids by weight, and the weight ratio of water: organic solvent is from about 90:10 to about 50:50, preferably at least about 60:40.

12. The laminate formed by the method of any one of claims 1-8.

13. A composition comprising
a. a sulfonated amorphous copolyester resin preferably comprising: (a) residues of at least two diols comprising ethylene glycol and (b) residues of at least three diacids or diesters comprising: (i) at least one sulfomonomer; (ii) at least one aromatic diacid or diester; and (iii) at least one aliphatic diacid or diester, wherein:
the copolyester resin has a bound mole fraction of the ethylene glycol residues of between about 0.5 to about 0.9, and most preferably at least about 0.65 to about 0.85 based on the diol residues;
the bound ratio of residues of aromatic to aliphatic diacids or diesters is between about 75/25 and about 45/55, preferably between about 72/28 and about 48/52, more preferably between about 70/30 and about 50/50, and most preferably between about 68/32 and about 50/50; and
b. a water soluble crosslinker, preferably the water soluble crosslinker comprises at least one of
(i) a polyfunctional isocyanate having a functionality of at least about 2.0, preferably at least about 2.2, more preferably at least about 2.5, further preferably more than about 2.7, even further preferably at least about 2.9 and most preferably at least about 3.0,
(ii) a polyfunctional epoxy having a functionality at least about 2.0, preferably at least about 2.2, more preferably at least about 2.5, further preferably more than about 2.7, even further preferably at least about 2.9 and most preferably at least about 3.0 and
(iii) combinations thereof;
wherein the sulfonated amorphous copolyester resin has a glass transition temperature between about -25°C and about 15°C, preferably between about -18°C and about 10°C.

14. A laminating adhesive composition comprising a blend of an aqueous sulfonated copolyester dispersion and a water soluble crosslinker, preferably the water soluble crosslinker comprises at least one of: a polyfunctional isocyanate having a functionality of at least about 2.0, preferably at least about 2.2, more preferably at least about 2.5, further preferably more than about 2.7, even further preferably at least about 2.9 and most preferably at least about 3.0, a polyfunctional epoxy having a functionality of at least about 2.0, preferably at least about 2.2, more preferably at least about 2.5, further preferably more than about 2.7, even further preferably at least about 2.9 and most preferably at least about 3.0 and combinations thereof.

15. The laminating adhesive composition of claim 14 wherein the aqueous sulfonated copolyester dispersion comprises a sulfonated copolyester resin and an organic solvent in an aqueous medium, preferably the organic solvent comprises co-organic solvent, preferably the aqueous medium comprises deionized water, preferably the sulfonated copolyester resin has a Tg of less than about room temperature (about 25°C), more preferably less than about 10°C, even more preferably no more than 0°C, further preferably no more than about -10°C and/or preferably the sulfonated copolyester resin has a Tm of below about 50°C, more preferably below about 40°C, even more preferably no more than about 20°C, further preferably no more than about 10°C, even further preferably the sulfonated copolyester resin does not have a Tm.
